# EUROPEAN PATENT SPECIFICATION

(11) **EP 1 946 941 B1**
(45) Date of publication and mention of the grant of the patent: **31.10.2012**
(21) Application number: 06797869.2
(22) Date of filing: 12.09.2006
(51) Int. Cl.: B60C 11/03, B60C 11/01, B60C 11/04, B60C 11/12

(54) **PNEUMATIC TIRE**
LUFTREIFEN
PNEUMATIQUE

(30) Priority: 09.11.2005 JP 2005325060
(43) Date of publication of application: 23.07.2008
(73) Proprietor: The Yokohama Rubber Co., Ltd., Minato-ku Tokyo 105-8685 (JP)
(72) Inventor: MARUYAMA, Hirokatsu, Hiratsuka-shi, Kanagawa 2548601 (JP); MORITO, Takumi, Hiratsuka-shi, Kanagawa 2548601 (JP)
(74) Representative: HOFFMANN EITLE
(86) International application number: PCT/JP2006/318077
(87) International publication number: WO 2007/055065

(56) References cited:
- EP-A- 0 598 300
- WO-A-97/46400
- JP-A- 02 053 610
- JP-A- 03 271 003
- JP-A- 03 273 905
- JP-A- 04 274 905
- JP-A- 07 164 825
- JP-A- 10 129 217
- JP-A- 2000 219 010
- US-B1- 6 578 612

## Description

### TECHNICAL FIELD

The present invention relates to a pneumatic tire. Embodiments of the pneumatic tire have improved uneven-wear resistance and improved wet resistance.

### BACKGROUND ART

With a recent regulation on overloading, a mainstream of cargo vehicles in Japan is a vehicle having a gross vehicle weight of 25 tons. In most of 6x2 vehicles excluding recent vehicles (such as an 8x4 vehicle), tires in the tire size of 295/80R22.5 are installed on the front side and tires in the tire size of 11R22.5 are installed on the rear side. In other words, in those vehicles, tires of different sizes are installed on the front side and on the rear side. Therefore, because the positions of the tires are limited, a tire rotation cannot be performed even when the tires are unevenly worn. This results in a problem that an uneven tread wear, such as a shoulder wear or a wave wear, tends to occur in the shoulder land portions of the tires on the front side (in a rib or a block).

In vehicles for foreign markets, an installation pattern of tires is employed for each purpose. For example, rib tires having excellent uneven-wear resistance are installed on the front side, and traction (all-weather-applicable) tires having excellent wet resistance are installed on the rear side. However, vehicles for the Japanese market are required to have high wet performance and to have tires with a snow stamp (a stamp required during traffic control on a snowy day). For this reason, the installation of the rib tires on the front side only cannot meet such requirements sufficiently. Accordingly, it is required to install tires having both excellent uneven-wear resistance and excellent wet resistance on the front side as well.

The technology disclosed in Japanese Patent Application Laid-open No. 2001-63316 is known as a conventional pneumatic tire having excellent uneven-wear resistance and excellent wet resistance. The conventional pneumatic tire includes a plurality of ribs in a tread, the ribs being formed by a plurality of main grooves extending in the tire circumferential direction. At least main grooves on the shoulder sides are provided with uneven-wear sacrifice projections configured to slip on and be in contact with a road surface when the tire is in contact with the road surface, each uneven-wear sacrifice projection having a top portion whose position is set lower than the tread surface. At least two of the main grooves are zigzag. A plurality of sipes extending along the tire-width direction is formed in an edge of each of the ribs along the circumferential direction. A plurality of projections is provided on a groove bottom of each of at least two of the main grooves along the main-groove longitudinal direction.

It would therefore be desirable to provide a pneumatic tire having improved uneven-wear resistance and wet resistance.

Prior art pneumatic tires are known from US-B1-6 578 612; WO 97/46400 A; EP-A-0 598 300; and JP 2000 219010 A. These documents fail to disclose a pneumatic tire provided with a narrow rib that extends along a central land portion adjacent to the shoulder portion, being formed on an outer side of the central land portion in the tire-width direction.

### SUMMARY OF THE INVENTION

According to the present invention, there is provided a pneumatic tire comprising: a plurality of main grooves extending in a tire circumferential direction and a plurality of sub grooves that communicates with the main grooves, the main grooves and the sub grooves formed on a tread portion; a plurality of central land portions in a block shape divided by the main grooves and the sub grooves, the central land portions formed in a center region of the tread portion; and a shoulder land portion in a rib shape divided by the main grooves, the shoulder land portion formed in each of shoulder regions of the tread portion, wherein a groove area ratio A of a total area of the main grooves and the sub grooves to an area of a region between an outer-side edge of one shoulder land portion in a tire-width direction and an outer-side edge of other shoulder portion in the tire-width direction satisfies 0.25≤A≤0.32, a groove area ratio B of the total area of the main grooves and the sub grooves to an area of a region between an inner-side edge of the one shoulder land portion in the tire-width direction and an inner-side edge of the other shoulder portion in the tire-width direction satisfies 0.35≤B≤0.45, and a narrow rib that extends along a central land portion adjacent to the shoulder portion is formed on an outer side of the central land portion in the tire-width direction.

In the pneumatic tire, drainage performance of the tread center region improves because the central land portions have the block shape (have the sub grooves). The improvement leads to the advantage that wet resistance of the tire improves. The tread center region and the tread shoulder regions are divided with the boundaries that are the main grooves positioned outermost in the tire-width direction among the main grooves. (2) Because the shoulder land portions have the rib shape, the occurrence of initial uneven wear (for example, small heel-and-toe wear resulting from lug grooves or step wear growing along the lug grooves) in the shoulder land portions is reduced compared with, for example, the structure in which shoulder land portions includes lug grooves and the like. The reduction leads to the advantage that the uneven-wear resistance of the tire improves. (3) Because the groove area ratios A and B to the certain regions are made appropriate, the balance between the total area of the grooves in the tread and the total area of the land portions in the tread are made appropriate. The appropriate balance leads to the advantage that the wet resistance and the uneven-wear resistance of the tire are preferably maintained. The groove area ratio indicates the ratio of the total area of the main grooves and the sub grooves in the certain region to the area of the certain region of the plan view of the tread.

In the pneumatic tire, the narrow ribs are positively wear when the tire is in contact with the road surface to function as sacrifice ribs of the central land portions. The sacrifice ribs lead to the advantage that the uneven wear (for example, punching) of the central land portions is reduced and that the uneven-wear resistance of the tire thus improves.

In preferred embodiments, the pneumatic tire according to the present invention includes at least four of the main grooves.

In the pneumatic tire, at least four main grooves are formed. The four main grooves leads to the advantage that the wet performance (traction performance) is assured.

In further preferred embodiments, the pneumatic tire according to the present invention has a tread development width W1 and a width W3 of the shoulder land portion in the tire-width direction satisfying 0.15 W3/W1 0.19.

In the pneumatic tire, the ratio of the width W3 of each of the two shoulder land portions in the tire-width direction to the tread development width W1 is made appropriate. The appropriate ratio leads to the advantage that the uneven-wear resistance and the wet resistance of the tire are assured.

In even further preferred embodiments, the pneumatic tire according to the present invention has a tread development width W1 and an arrangement pitch of the sub grooves in the tire circumferential direction h satisfying 0.11<h/W1<0.26.

In the pneumatic tire, the tread development width W1 and the arrangement pitch h of the sub grooves in the tire circumferential direction are made appropriate. The appropriate width and the appropriate pitch lead to the advantage that the uneven-wear resistance and the wet resistance of the tire are assured.

In yet further preferred embodiments, the pneumatic tire according to the present invention includes a narrow rib that extends along the shoulder land portion formed on an outer side of the shoulder land portion in the tire-width direction.

In the pneumatic tire, the narrow ribs positively wear when the tire is in contact with the road surface to function as sacrifice ribs of the shoulder land portions. The sacrifice ribs lead to the advantage that uneven wear (for example, shoulder step wear or rail wear) on the initial use of the tire is reduced and that the uneven-wear resistance of the tire thus improves.

In still further preferred embodiments, the pneumatic tire according to the present invention includes a narrow groove that extends in the tire circumferential direction formed in a non-contact region on an outer side of the tread portion in the tire-width direction.

In the pneumatic tire, the narrow grooves are filled due to the contact pressures when the pneumatic tire is in contact with the road surface, and thus, the contact pressure in each of the portions of the shoulder land portions on the tire-width direction outer sides is reduced. The reduction of the contact pressures lead to the advantage that the uneven wear of the shoulder land portions is reduced and that the uneven-wear resistance of the tire thus improves.

In yet even further preferred embodiments, the pneumatic tire according to the present invention includes a sipe formed on the inner-side edge of the shoulder land portion in the tire-width direction.

In the pneumatic tire, the contact pressure of each of the portions of the shoulder land portions on the tire-width direction inner sides is reduced because of the sipes when the tire is in contact with the road surface. The reduction of the contact pressures lead to the advantage that the uneven wear (rail wear) of the shoulder land portions is reduced and that the uneven-wear resistance of the tire thus improves.

In still even further preferred embodiments, in the pneumatic tire according to the present invention, a dent process is performed on the inner-side edge of the shoulder land portion in the tire-width direction.

In the pneumatic tire, the contact pressure of each of the portions of the shoulder land portions on the tire-width direction inner sides is reduced because of the dent process when the tire is in contact with the road surface. The reduction of the contact pressures leads to the advantage that the uneven wear (rail wear) of the shoulder land portions is reduced and that the uneven-wear resistance of the tire thus improves.

In yet still further preferred embodiments, the pneumatic tire according to the present invention includes a sipe that goes through the shoulder land portion in a tire-width direction formed on the shoulder land portion.

In the pneumatic tire, the sipes increase the edge components of the shoulder land portions. The increase of the edge components leads to the advantage that the wet resistance improves.

In yet still even further preferred embodiments, the pneumatic tire according to the present invention is applied to a heavy-duty pneumatic radial tire.

In a radial tire for heavy load, the number of occurrence of uneven wear is significant and the inhibition of the occurrence is extremely highly required. For this reason, the application of the above structure for the heavy-duty pneumatic radial tire leads to the advantage that the improved effect of the wet performance and the uneven-wear resistance of the tire are obtained more remarkably.

With embodiments of the pneumatic tire 1 according to the present invention, (1) the drainage performance of the tread center region improves because the central land portions have the block shape. The improvement leads to the advantage that the wet resistance of the tire improves. (2) Because the shoulder land portions have the rib shape, the occurrence of initial uneven wear of the shoulder land portions is reduced compared with, for example, the structure in which shoulder land portions include lug grooves and the like. The reduction of the initial uneven wear leads to the advantage that the uneven-wear resistance of the tire improves. (3) Because the groove area ratios A and B to the certain regions are made appropriate, the balance between the total area of the grooves in the tread and the total area of the land portions in the tread are made appropriate. The appropriate balance leads to the advantage that the wet resistance and the uneven-wear resistance of the tire are preferably maintained.

### BRIEF DESCRIPTION OF DRAWINGS

To enable a better understanding of the present invention, and to show how the same may be carried into effect, reference will now be made, by way of example only, to the accompanying drawings, in which:-

[Fig. 1] Fig. 1 is a plan view depicting a tread surface of a pneumatic tire according to an embodiment of the present invention;
[Fig. 2] Fig. 2 is an explanatory view depicting a modified example of the pneumatic tire shown in Fig. 1;
[Fig. 3] Fig. 3 is an explanatory view depicting a modified example of the pneumatic tire shown in Fig. 1;
[Fig. 4] Fig. 4 is an explanatory view depicting a modified example of the pneumatic tire shown in Fig. 1;
[Fig. 5] Fig. 5 is an explanatory view depicting a modified example of the pneumatic tire shown in Fig. 1; and
[Fig. 6] Fig. 6 is a table indicating test results of performance tests of pneumatic tires according to the embodiment of the present invention.

### EXPLANATION OF REFERENCE NUMERALS

- 1: Pneumatic tire
- 21, 22: Main groove
- 23: Sub groove
- 31, 32: Central land portion
- 33: Shoulder land portion
- 41, 44: Narrow rib
- 42, 43: Sipe
- 45: Narrow groove
- 46: Dent process

### DETAILED DESCRIPTION

The present invention is explained in detail below with reference to the drawings. The embodiment does not limit the present invention. The constituents of the embodiment include constituents that can be easily replaced by those skilled in the art and constituents substantially same as the constituents of the embodiment. The modified examples disclosed in the embodiment can be arbitrarily combined to the extent that will be apparent to those skilled in the art.

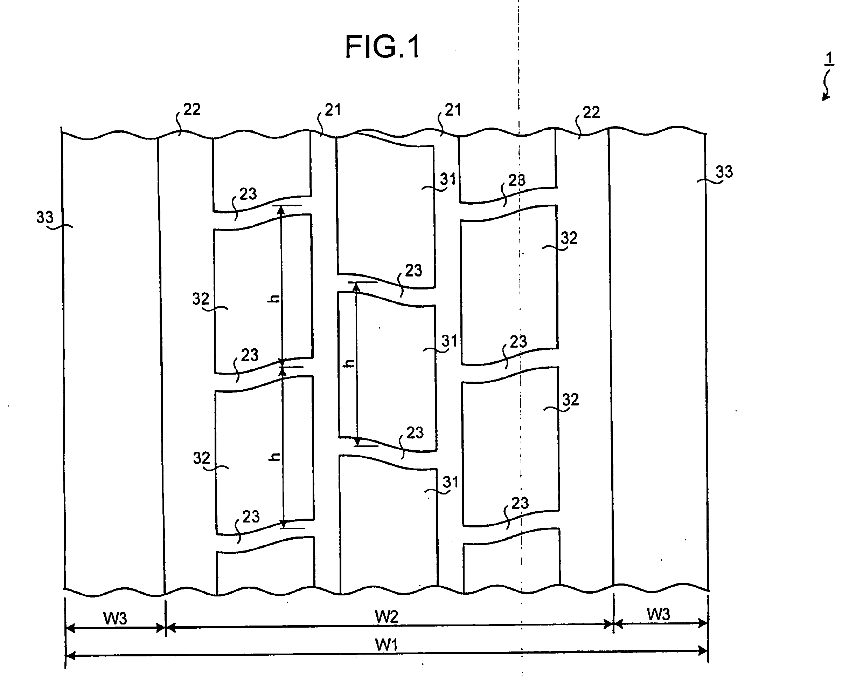

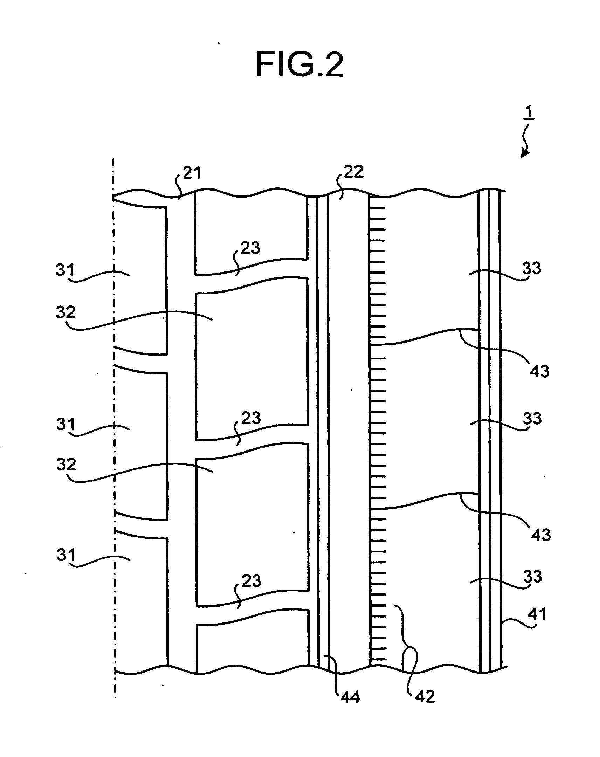

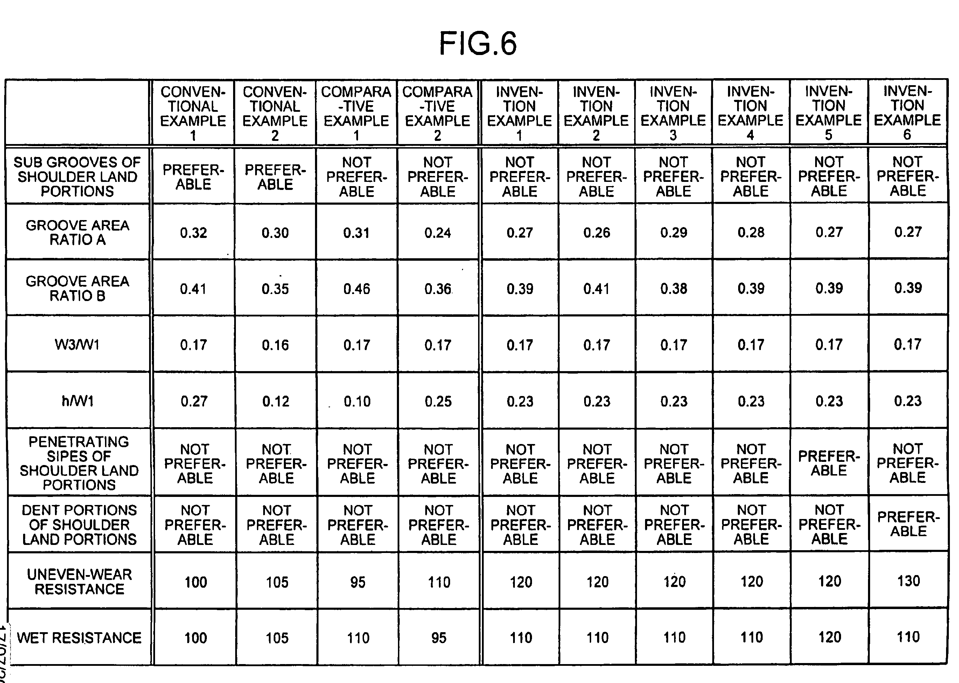

Fig. 1 is a plan view depicting a tread surface of a pneumatic tire according to an embodiment of the present invention. Figs. 2 to 5 are explanatory views depicting modified examples of the pneumatic tire shown in Fig. 1. Fig. 6 is a table indicating test results of performance tests of pneumatic tires according to the embodiment of the present invention.

In a pneumatic tire 1, a plurality of main grooves 21 and 22 and a plurality of land portions 31 to 33 are formed in a tread (see Fig. 1). Each of the main grooves 21 and 22 extends in the tire circumferential direction and has a basic line roughly straight. The land portions 31 and 33 are formed by the main grooves 21 and 22. The land portions 31 to 33 are divided into the land portions 31 and 32 in a tread center region (hereinafter, "central land portions") and the land portions 33 in a tread shoulder region (hereinafter, "shoulder land portions") with the boundaries that are the main grooves 22 and 22 among the main grooves 21 and 22, the main grooves 22 and 22 being positioned outermost in the tire-width direction.

In the tread, for example, at least four of the main grooves 21 and 22 are formed and at least five lines of the land portions 31 to 33 are formed by the main grooves 21 and 22. Specifically, at least three lines of the central land portions 31, 32 and 31 are formed in the tread center region and the shoulder land portions 33 and 33 are formed respectively in the tread shoulder regions.

In each of the central land portions 31 and 32, a plurality of sub grooves 23 is formed. The sub grooves 23 communicate with the main grooves 21 and 22 and connect the adjacent main grooves 21 and 22 (allow the adjacent main grooves 21 and 22 to communicate). Hence, the central land portions 31 and 32 are each formed in a block shape by the main grooves 21 and 22 and the sub grooves 23 (see Fig. 1). Meanwhile, the sub grooves 23 are not formed in the shoulder land portions 33. Accordingly, the shoulder land portions 33 are each formed in a rib shape only by the main grooves 22.

A groove area ratio A of the total area of the main grooves 21 and 22 and the sub grooves 23 to the area of a region (region of a tread development width W1) between a first edge of one of the shoulder land portions 33 on the tire-width direction outer side and a first edge of the other shoulder land portion 33 on a tire-width direction outer side falls within a range of 0.25≤A≤0.32. In other words, the ratio of the total area of the main grooves 21 and 22 and the sub grooves 23 in the certain region to the area of the certain region is defined in the certain range. Similarly, a groove area ratio B of the total area of the main grooves 21 and 22 and the sub grooves 23 to an area of a region (region of a tread development width W2) between a second edge of the one shoulder land portion 33 on a tire-width direction inner side and a second edge of the other shoulder land portion 33 on a tire-width direction inner side falls within a range of 0.35≤B≤0.45.

In the pneumatic tire 1, (1) drainage performance of the tread center region improves because the central land portions 31 and 32 have the block shape (sub grooves 23). The improvement leads to the advantage that wet resistance of the tire improves.

(2) Because the shoulder land portions 33 have the rib shape, the occurrence of initial uneven wear (for example, small heel-and-toe wear resulting from lug grooves or step wear growing along the lug grooves) of the shoulder land portions 33 is reduced compared with, for example, the structure in which shoulder land portions include lug grooves and the like. The reduction of the initial uneven wear leads to the advantage that the uneven-wear resistance of the tire improves.

(3) Because the groove area ratios A and B to the certain regions are made appropriate, the balance between the total area of the grooves 21 to 23 in the tread and the total area of the land portions 31 to 33 in the tread are made appropriate. The appropriate balance leads to the advantage that the wet resistance and the uneven-wear resistance of the tire are preferably maintained. For example, when A<0.25 or B<0.35 is satisfied, the function of the grooves 21 to 23 is not sufficiently assured, and thus, the drainage performance of the tire reduces. When 0.32<A or 0.45<B is satisfied, the rigidity of the land portions 31 to 33 are insufficient, and thus, uneven wear tends occur in the land portions.

In the pneumatic tire 1, a narrow rib 44 extending along the central land portion 32 is formed on the tire-width direction outer side of the central land portion 32 adjacent to the shoulder land portion 33 (see Figs. 2). Specifically, the narrow rib 44 extending along the central land portion 32 in the tire circumferential direction is formed in the main groove 22 that forms the shoulder land portion 33. The narrow rib 44 is formed in each of the central land portions 32 and 32 each being adjacent to a corresponding one of the two shoulder land portions 33 and 33. In the structure, the narrow ribs 44 positively wear to function as sacrifice ribs of the central land portions 32 when the tire is in contact with the road surface. The sacrifice ribs lead to the advantage that the uneven wear (for example, punching) of the central land portions 32 is reduced and that the uneven-wear resistance of the tire thus improves.

### [First Modified Example]

It is preferable in the pneumatic tire 1 that at least four of the main grooves 21 and 22 are formed (see Fig. 1). In other words, it is preferable that at least five lines of the land portions 31 to 33 be formed. Such formation leads to the advantage that the wet performance (traction performance) of the tire is assured.

### [Second Modified Example]

It is preferable in the pneumatic tire 1 that the tread development width W1 and the width W3 of each of the two shoulder land portions 33 and 33 in the tire-width direction have the relationship of 0.15<W3/W1<0.19. The relationship leads to the advantage that the uneven-wear resistance and the wet resistance of the tire are assured. When W3/W1<0.15 is satisfied, for example, the width W3 of the shoulder land portion 33 is insufficient and there is the risk that shoulder wear occur. When 0.19<W3/W1 is satisfied, the groove area of the tread center region is insufficient so that the wet resistance of the tire deteriorates. Because the widths of the central land portions 31 and 32 become smaller as well, there is the risk that the heel-and-toe wear occur due to reduction of the rigidity of the central land portions 31 and 32.

The tread development width W1 is the linear distance between the two edges of the tread-patterned portion of the tire mounted on a regular rim to which a regular inner pressure is applied and no load is applied. The regular rim includes "application rim" defined by JATMA, "design rim" defined by TRA, and "measuring rim" defined by ETRTO. The regular inner pressure includes "maximum air pressure" defined by JATMA, the maximum value in "tire load limits at various cold inflation pressures" defined by TRA, and "inflation pressure" defined by ETRTO. A regular load includes "maximum load resistance" defined by JATMA, the maximum value in "tire load limits at various cold inflation pressures" defined by TRA, and "load capacity" defined by ETRTO. In the case of a pneumatic tire for passenger cars, the regular inner pressure is an air pressure of 180kPa and the regular load is 88% of the maximum load capacity.

### [Third Modified Example]

It is preferable in the pneumatic tire 1 that the tread development width W1 and an arrangement pitch h of the sub grooves 23 in the tire circumferential direction have the relationship of 0.11≤h/W1≤0.26 (see Fig. 1). The relationship leads to the advantage that the wear resistance and the wet resistance of the tire are assured. When h/W1<0.11 is satisfied, the length of each of the central land portions 31 and 32 is small, and thus, there is the risk that the central land portions 31 and 32 have insufficient rigidity so that heel-and-toe wear occurs. When 0.26<h/W1 is satisfied, the groove area to the tread center region is insufficient so that the driving stability on a wet road surface deteriorates and that the total number of the sub grooves 23 decreases so that the drainage performance deteriorates.

### [Fourth Modified Example]

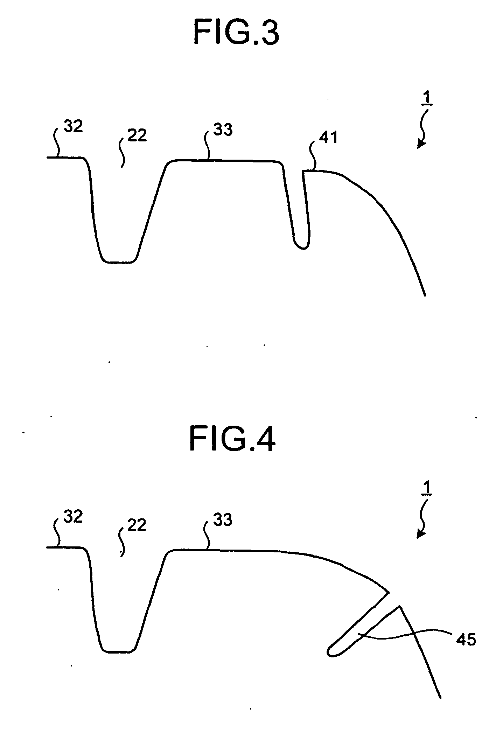

It is preferable in the pneumatic tire 1 that a narrow rib 41 extending along the shoulder land portion 33 be formed on the tire-width direction outer side of the shoulder land portion 33 (see Figs. 2 and 3). The narrow rib 41 is formed on each of the two shoulder land portions 33 and 33. In the structure, the narrow ribs 41 positively wear to function as sacrifice ribs of the shoulder land portions 33 when the tire is in contact with the road surface. The sacrifice ribs lead to the advantage that uneven wear (for example, shoulder step wear or rail wear) of the shoulder land portions 33 on the initial use of the tire is reduced and that the uneven-wear resistance of the tire thus improves.

In place of the narrow ribs 41, a narrow groove 45 extending in the tire circumferential direction can be formed in a non-contact regions (buttresses) of the tread on the tire-width direction outer side (see Fig. 4). When viewed in a cross section in the tire-meridian direction, the narrow groove 45 has a groove width in the direction in which the narrow groove 45 slants from the shoulder of the tire to the tire-width direction inner side. The narrow groove 45 is formed on each of the two sides of the tread. In the structure, the narrow grooves 45 are filled because of contact pressures when the tire is in contact with the road surface so that the contact pressures in portions of the shoulder land portion 33 on the tire-width direction outer sides are reduced. The reduction of the contact pressures leads to the advantage that the uneven wear of the shoulder land portions 33 is reduced and that the uneven-wear resistance of the tire thus improves.

### [Fifth Modified Example]

It is preferable in the pneumatic tire 1 that a plurality of sipes 42 be formed on the second edge of the shoulder land portion 33 on the tire-width direction inner side (see Fig. 2). The sipes 42 each having a small sipe length and a small sipe width are arranged along the tire circumferential direction (the main groove 22). The sipe 42 are formed on each of the two shoulder land portions 33 and 33. In the structure, the sipes 42 reduce contact pressures of portions of the shoulder land potions 33 on the tire-width direction inner sides when the tire is in contact with the road surface. The reduction of the contact pressures leads to the advantage that uneven wear (rail wear) of the shoulder land portions 33 is reduced and that the uneven-wear resistance of the tire thus improves. The size, the number, the arrangement density, and the like of the sipes 42 can be appropriately designed and changed depending on the specification of the tire and the like.

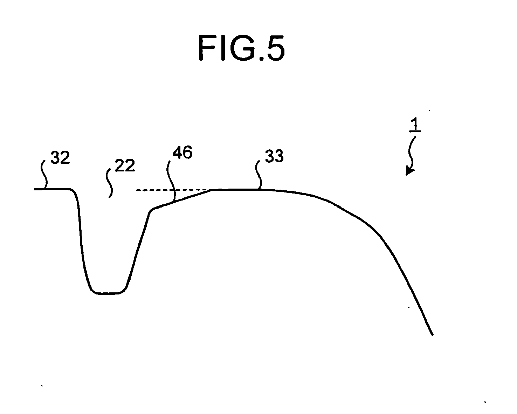

In place of the sipes 42, a dent process 46 can be performed on the second edges of the shoulder land portions 33 on the tire-width direction inner sides (see Fig. 5). The dent process 46 is performed such that the second edges of the shoulder land portions 33 on the tire-width direction inner sides (main groove 22 side) slightly dent to the groove bottom side in a cross section in the tire-meridian direction. In the structure, the contact pressures of the portions of the shoulder land portions 33 on the tire-width direction inner sides are reduced because of the dent process 46. The reduction of the contact pressures leads to the advantage that the uneven wear (rail wear) of the shoulder land portions 33 is reduced and that the uneven-wear resistance of the tire thus improves.

### [Sixth Modified Example]

It is preferable in the pneumatic tire 1 that sipes 43 penetrating the shoulder land portion 33 in the tire-width direction be formed in the shoulder land portion (see Fig. 2). The sipes 43 are formed on each of the shoulder land portions 33 and 33. In the structure, the sipes 43 increase the edge components of the shoulder land portions 33. The increase of the edge components leads to the advantage that the wet resistance improves.

### [Application Example]

It is preferable that the structure of the pneumatic tire 1 be applied for a heavy-duty pneumatic radial tire. The number of occurrence of uneven wear in a heavy-duty pneumatic radial tire is significant, and the inhibition of the occurrence is highly required. For this reason, the application of the above structure for the heavy-duty pneumatic radial tire leads to the advantage that improved effects of the wet performance and the uneven-wear resistance of the tire are obtained.

### [Performance Test]

In the embodiment, performance tests for (1) uneven-wear resistance and (2) wet resistance were performed on a plurality of types of pneumatic tires under different conditions (see Fig. 6). In each of the performance tests, a pneumatic tire in the tire size of 295/80R22.5 is mounted on a wheel in the rim size of 22.5x8.25 and an air pressure of 900kPa and a regular load defined by JATMA is applied to the pneumatic tire.

(1) In the tests for uneven-wear resistance, a test vehicle in which a pneumatic tire is installed in a front shaft travels a test course of 50,000km, and then, uneven wear occurring in central land portions and shoulder land portions is measured. Based on the measurement results, index evaluation is carried out, using conventional examples as standards (100). Larger values of the evaluation results represent preferable evaluation results.

(2) In the tests for wet resistance, a test vehicle in which a pneumatic tire is installed travels on a wet road surface, and braking distances are measured from an initial speed of 40km/h. Based on the measurement results, index evaluation is carried out, using conventional examples as standards (100). Larger values of the evaluation results represent preferable evaluation results.

In each of the pneumatic tires of Conventional examples 1 and 2, both central land portions and shoulder land portions have a block shape formed by main grooves and sub grooves (not shown, see Fig. 1). In the pneumatic tire of Conventional example 2, the groove area ratios A, B, W3/W1, and h/W1 of the region of the tread development width W1 are made appropriate.

In each of the pneumatic tires of Invention examples 1 to 6, on the other hand, only central land portions have block shapes formed by the main grooves 21 and 22 and the sub grooves 23, and the shoulder land portions 33 have the rib shape without sub grooves (see Fig. 1). The groove area ratios A, B, W3/W1, and h/W1 of the region of the tread development width W1 of the region of the tread development width W1 are made appropriate.

First, making a comparison between Conventional example 1, Comparative examples 1 and 2, and Invention examples 1 to 6, it is found that the uneven-wear resistance and the wet resistance of the tire are improved by making appropriate the groove area ratios A, B, W3/W1, and h/W1 of the region of the tread development width W1. Making a comparison between Conventional example 2 and Invention examples 1 to 6, it is found that the uneven-wear resistance and the wet resistance of the tire effectively improve more because the shoulder land portions 33 have the rib shape (without sub grooves).

Making a comparison between Invention example 1 and Invention Example 5, it is found that the wet resistance of the tire improves because the shoulder land portions 33 includes the sipes 43 that penetrates the shoulder land portions 33 in the tire-width direction. It is also found that the uneven-wear resistance of the tire improves because the shoulder land portions 33 have the dent process 46 (alternatively, the sipes 42) on the second edges on the tire-width direction inner sides.

### INDUSTRIAL APPLICABILITY

As described above, embodiments of the pneumatic tire according to the present invention are advantageous because the pneumatic tires have improved uneven-wear resistance and improved wet resistance.

## Claims

1. A pneumatic tire (1) comprising:
a plurality of main grooves (21, 22) extending in a tire circumferential direction and a plurality of sub grooves (23) that communicates with the main grooves (21, 22), the main grooves (21, 22) and the sub grooves (23) formed on a tread portion;
a plurality of central land portions (31, 32) in a block shape divided by the main grooves (21, 22) and the sub grooves (23), the central land portions (31, 32) formed in a center region of the tread portion; and
a shoulder land portion (33) in a rib shape divided by the main grooves (21, 22), the shoulder land portion (33) formed in each of shoulder regions of the tread portion, wherein
a groove area ratio A of a total area of the main grooves (21, 22) and the sub grooves (23) to an area of a region between an outer-side edge of one shoulder land portion (33) in a tire-width direction and an outer-side edge of other shoulder portion in the tire-width direction satisfies 0.25≤A≤0.32,
a groove area ratio B of the total area of the main grooves (21, 22) and the sub grooves (23) to an area of a region between an inner-side edge of the one shoulder land portion (33) in the tire-width direction and an inner-side edge of the other shoulder portion in the tire-width direction satisfies 0.35≤B≤0.45, and **characterised in that**
a narrow rib (44) that extends along a central land portion (31, 32) adjacent to the shoulder portion is formed on an outer side of the central land portion (31, 32) in the tire-width direction.

2. The pneumatic tire (1) according to claim 1, wherein at least four of the main grooves (21, 22) are formed.

3. The pneumatic tire (1) according to claim 1 or 2, wherein a tread development width W1 and a width W3 of the shoulder land portion (33) in the tire-width direction satisfy 0.15<W3/W1<0.19.

4. The pneumatic tire (1) according to any one of claims 1 to 3, wherein a tread development width W1 and an arrangement pitch of the sub grooves (23) in the tire circumferential direction h satisfy 0.11<h/W1<0.26.

5. The pneumatic tire (1) according to any one of claims 1 to 4, wherein a narrow rib (41) that extends along the shoulder land portion (33) is formed on an outer side of the shoulder land portion (33) in the tire-width direction.

6. The pneumatic tire (1) according to any one of claims 1 to 4, wherein a narrow groove (45) that extends in the tire circumferential direction is formed in a non-contact region on an outer side of the tread portion in the tire-width direction.

7. The pneumatic tire (1) according to any one of claims 1 to 6, wherein a sipe (42) is formed on the inner-side edge of the shoulder land portion (33) in the tire-width direction.

8. The pneumatic tire (1) according to any one of claims 1 to 6, wherein a dent process is performed on the inner-side edge of the shoulder land portion (33) in the tire-width direction.

9. The pneumatic tire (1) according to any one of claims 1 to 8, wherein a sipe (43) that goes through the shoulder land portion (33) in a tire-width direction is formed on the shoulder land portion (33).

10. The pneumatic tire (1) according to any one of claims 1 to 9, wherein the pneumatic tire (1) is applied to a heavy-duty pneumatic radial tire.

## Patentansprüche

1. Luftreifen (1), umfassend:
eine Vielzahl von Hauptrillen (21, 22), welche sich in einer reifenumlaufenden Richtung erstrecken und eine Vielzahl von Unterrillen (23), welche mit den Hauptrillen (21, 22) in Verbindung stehen, wobei die Hauptrillen (21, 22) und die Unterrillen (23) auf einem Laufflächenteil gebildet sind;
eine Vielzahl von zentralen Grundteilen (31, 32), in einer Blockform, die durch die Hauptrillen (21, 22) und die Unterrillen (23) unterteilt sind, wobei die zentralen Grundteile (31, 32) in einem Zentralbereich des Laufflächenteils gebildet sind; und
einen Schultergrundteil (33), in einer Rippenform geteilt durch die Hauptrillen (21, 22), wobei der Schultergrundteil (33) in jeder von Schulterregionen des Laufflächenteils gebildet ist, wobei
ein Rillenflächenverhältnis A einer Gesamtfläche der Hauptrillen (21, 22) und der Unterrillen (23) zu einer Fläche einer Region zwischen einer Außenseitenkante eines Schultergrundteils (33) in einer Reifenbreitenrichtung und einer Außenseitenkante des anderen Schulterteils in der Reifenbreitenrichtung 0.25 ≤ A ≤ 0.32 erfüllt,
ein Rillenflächenverhältnis B der Gesamtfläche der Hauptrillen (21, 22) und der Unterrillen (23) zu einer Fläche einer Region zwischen einer Innenseitenkante des einen Schultergrundteils (33) in der Reifenbreitenrichtung und einer Innenseitenkante des anderen Schulterteils in der Reifenbreitenrichtung 0.35 ≤ B ≤ 0.,5 erfüllt, und **gekennzeichnet dadurch, dass**
eine enge Rippe (44), welche sich entlang eines Zentralgrundteils (31, 32) benachbart zu dem Schulterteil erstreckt, auf einer Außenseite des Zentralgrundteils (31, 32) in der Reifenbreitenrichtung gebildet ist.

2. Luftreifen (1) nach Anspruch 1, wobei mindestens vier der Hauptrillen (21, 22) gebildet sind.

3. Luftreifen (1) nach Anspruch 1 oder 2, wobei eine Laufflächenentwicklungsbreite W1 und eine Breite W3 des Schultergrundteils (33) in der Reifenbreitenrichtung 0.15 < W3/W1 < 0.19 erfüllt.

4. Luftreifen (1) nach einem der Ansprüche 1 bis 3, wobei eine Laufflächenentwicklungsbreite W1 und eine Anordnungsneigung der Unterrillen (23) in der reifenumlaufenden Richtung h 0.11 < h/W1 < 0.26 erfüllt.

5. Luftreifen (1) nach einem der Ansprüche 1 bis 4, wobei eine enge Rippe (41), welche sich entlang des Schultergrundteils (33) erstreckt, auf einer Außenseite des Schultergrundteils (33) in der Reifenbreitenrichtung gebildet ist.

6. Luftreifen (1) nach einem der Ansprüche 1 bis 4, wobei eine enge Rille (45), welche sich in der reifenumlaufenden Richtung erstreckt, in einer Nichtkontaktregion auf einer Außenseite des Laufflächenteils in der Reifenbreitenrichtung gebildet ist.

7. Luftreifen (1) nach einem der Ansprüche 1 bis 6, wobei eine Lamelle (42) auf der Innenseitenkante des Schultergrundteils (33) in der Reifenbreitenrichtung gebildet ist.

8. Luftreifen (1) nach einem der Ansprüche 1 bis 6, wobei ein Eindrückungsprozess auf der Innenseitenkante des Schultergrundteils (33) in der Reifenbreitenrichtung durchgeführt wird.

9. Luftreifen (1) nach einem der Ansprüche 1 bis 8, wobei eine Lamelle (43), welche durch den Schultergrundteil (33) in einer Reifenbreitenrichtung geht, auf dem Schultergrundteil (33) gebildet wird.

10. Luftreifen (1) nach einem der Ansprüche 1 bis 9, wobei der Luftreifen (1) auf einen Hochleistungsradialreifen angewendet wird.

## Revendications

1. Bandage pneumatique (1) comprenant :
une pluralité de rainures principales (21, 22) s'étendant dans une direction circonférentielle de pneu et une pluralité de rainures secondaires (23) qui communiquent avec les rainures principales (21, 22), les rainures principales (21, 22) et les rainures secondaires (23) étant formées sur une partie formant bande de roulement ;
une pluralité de parties centrales formant surfaces d'appui (31, 32) en forme de blocs, divisées par les rainures principales (21, 22) et les rainures secondaires (23), les parties centrales formant surfaces d'appui (31, 32) étant formées dans une région centrale de la partie formant bande de roulement ; et
une partie d'épaulement formant surface d'appui (33) en forme de nervure divisée par les rainures principales (21, 22), la partie d'épaulement formant surface d'appui (33) étant formée dans chacune des régions d'épaulement de la partie formant bande de roulement, dans lequel
un rapport de surface de rainure A d'une surface totale des rainures principales (21, 22) et des rainures secondaires (23) sur une surface d'une région entre un bord côté extérieur d'une partie d'épaulement formant surface d'appui (33) dans un sens de la largeur de pneu et un bord côté extérieur de l'autre partie d'épaulement dans le sens de la largeur de pneu satisfait à 0,25 ≤ A ≤ 0,32,
un rapport de surface de rainure B de la surface totale des rainures principales (21, 22) et des rainures secondaires (23) sur une surface d'une région entre un bord côté intérieur d'une partie d'épaulement formant surface d'appui (33) dans le sens de la largeur de pneu et un bord côté intérieur de l'autre partie d'épaulement dans le sens de la largeur de pneu satisfait à 0,35 ≤ B ≤ 0,45, et **caractérisé en ce que**
une nervure étroite (44) qui s'étend le long d'une partie centrale formant surface d'appui (31, 32) adjacente à la partie d'épaulement est formée sur un côté extérieur de la partie centrale formant surface d'appui (31, 32) dans le sens de la largeur de pneu.

2. Bandage pneumatique (1) selon la revendication 1, dans lequel au moins quatre des rainures principales (21, 22) sont formées.

3. Bandage pneumatique (1) selon la revendication 1 ou 2, dans lequel une largeur de développement de bande de roulement W1 et une largeur W3 de la partie d'épaulement formant surface d'appui (33) dans le sens de la largeur de pneu satisfont à 0,15 < W3/W1 < 0,19.

4. Bandage pneumatique (1) selon l'une quelconque des revendications 1 à 3, dans lequel une largeur de développement de bande de roulement W1 et un intervalle d'agencement des rainures secondaires (23) dans la direction circonférentielle de pneu h satisfont à 0,11 < h/W1 < 0,26.

5. Bandage pneumatique (1) selon l'une quelconque des revendications 1 à 4, dans lequel une nervure étroite (41) qui s'étend le long de la partie d'épaulement formant surface d'appui (33) est formée sur un côté extérieur de la partie d'épaulement formant surface d'appui (33) dans le sens de la largeur de pneu.

6. Bandage pneumatique (1) selon l'une quelconque des revendications 1 à 4, dans lequel une rainure étroite (45) qui s'étend dans la direction circonférentielle de pneu est formée dans une région sans contact sur un côté extérieur de la partie formant bande de roulement dans le sens de la largeur de pneu.

7. Bandage pneumatique (1) selon l'une quelconque des revendications 1 à 6, dans lequel une lamelle (42) est formée sur le bord côté intérieur de la partie d'épaulement formant surface d'appui (33) dans le sens de la largeur de pneu.

8. Bandage pneumatique (1) selon l'une quelconque des revendications 1 à 6, dans lequel un processus de bosselure est effectué sur le bord côté intérieur de la partie d'épaulement formant surface d'appui (33) dans le sens de la largeur de pneu.

9. Bandage pneumatique (1) selon l'une quelconque des revendications 1 à 8, dans lequel une lamelle (43) qui passe par la partie d'épaulement formant surface d'appui (33) dans le sens de la largeur de pneu est formée sur la partie d'épaulement formant surface d'appui (33).

10. Bandage pneumatique (1) selon l'une quelconque des revendications 1 à 9, dans lequel le bandage pneumatique (1) est appliqué à un bandage pneumatique à carcasse radiale très résistant.
